# EUROPÄISCHE PATENTSCHRIFT

(11) **EP 1 610 988 B1**
(45) Veröffentlichungstag und Bekanntmachung des Hinweises auf die Patenterteilung: **30.09.2009**
(21) Anmeldenummer: 04707188.1
(22) Anmeldetag: 02.02.2004
(51) Int. Cl.: B60S 1/16, F16H 55/24, F16H 57/12, F16H 1/16

(54) **ELEKTRISCHE ANTRIEBSEINHEIT**
ELECTRIC DRIVE UNIT
UNITE D'ENTRAINEMENT ELECTRIQUE

(30) Priorität: 25.03.2003 DE 10313226
(43) Veröffentlichungstag der Anmeldung: 04.01.2006
(73) Patentinhaber: ROBERT BOSCH GMBH, 70442 Stuttgart (DE)
(72) Erfinder: WEIGOLD, Thomas, 76532 Baden-Baden (DE); MOOSMANN, Johannes, 77830 Buehlertal (DE)
(86) Internationale Anmeldenummer: PCT/DE2004/000155
(87) Internationale Veröffentlichungsnummer: WO 2004/085216

(56) Entgegenhaltungen:
- CH-A- 225 420
- GB-A- 1 397 295
- US-A- 4 979 404

## Beschreibung

Die vorliegende Erfindung betrifft eine elektrische Antriebseinheit nach dem Oberbegriff des Patentanspruches 1 sowie ein Verfahren zur Montage der Antriebseinheit.

Allgemein bekannt ist, dass Antriebe für Scheibenwischer im Kraftfahrzeug typischerweise ein Schneckengetriebe aufweisen. Bei diesen Antrieben ist es erforderlich, den Achsabstand zwischen der Schneckenachse und der Schneckenradachse abhängig von den Toleranzen der eingesetzten Bauteile und den Fertigungstoleranzen so einzustellen, dass das Zahnflankenspiel minimiert wird. Die Einstellung erfolgt dabei häufig mittels einer Excenterbuchse, die entsprechend vorpositioniert eingebaut wird. Die Lagerlänge bzw. die Länge der Excenterbuchse, die typischerweise als Sinterbuchse ausgeführt ist, ist bedingt durch die Geometrie der Buchse und durch den Herstellprozess begrenzt. Dabei liegen die nach dem Stand der Technik hergestellten Buchsen bereits an der Grenze der Herstellbarkeit. Derzeit können Excenterbuchsen bis zu einer Länge von ca. 40 mm hergestellt werden. Die Buchse ist aufgrund der Länge aufwendig herzustellen und daher teuer, zudem treten Qualitätsprobleme bei langen Excenterbuchsen auf. Auch ist die Herstellung des Lagersitzes für derart lange Buchsen aufwendig.

Eine gattungsgemäße Antriebseinheit, insbesondere für Scheibenwischer eines Kraftfahrzeuges, ist bekannt aus der DE 198 21 079, wobei die Abtriebwelle in einer Excenterbuchse gelagert ist. Diese ist zur Einstellung des Achsabstandes zwischen der Ankerwelle und der Abtriebswelle verdrehbar und im verdrehten Zustand verdrehsicher im Getriebegehäuse montierbar. Zur einfachen und kostengünstigen Herstellbarkeit ist die Excenterbuchse derart gestuft ausgebildet, dass sie an ihrer einem Montageflansch zugewandten Seite einen größeren Durchmesser aufweist als an der gegenüber liegenden Seite.

Alternativ ist es auch möglich auf den Einsatz einer Excenterbuchse zu verzichten und den Achsabstand zwischen der Schneckenachse und der Schneckenradachse durch ein Ausmessen der Toleranzlage des vormontierten Motors und ein entsprechend ausgerichtetes Bohren der Aufnahmebohrung der Lagerbuchse, z.B. in der Montagelinie, einzustellen. Nachteilig dabei ist, dass das Ausmessen und das Bohren bei bereits vormontiertem Motor durchzuführen ist, dass ein Spanverbleib im Motor nicht sicher auszuschließen ist und ein Waschen nach dem Bohren nicht möglich ist. Auch kann der Spanverbleib im Motor nicht nachgeprüft bzw. nachgearbeitet werden, wodurch es zu Ausfällen im Betrieb kommen kann.

Eine gattungsgemäße Vorrichtung bzw. ein gattungsgemäßes Verfahren ist aus der GB-A-1 397 295 bekannt.

Vorteil der vorliegenden Erfindung ist es, dass eine Antriebseinheit bereitgestellt ist, bei der der Achsabstand zwischen der Ankerwelle und der Abtriebswelle sicher eingestellt werden kann. Die erfindungsgemäße elektrische Antriebseinheit zeichnet sich dadurch aus, dass zur Lagerung der Abtriebswelle voneinander beabstandet zwei Excenterbuchsen in dem Getriebegehäuse montiert sind. Dadurch sind die bekannten Nachteile des Standes der Technik vermieden. Insbesondere kann der Achsabstand bei Lagern, die länger als ca. 40 mm sein sollen, kostenoptimal hergestellt sowie auf einfache Weise eingestellt werden. Sowohl die Buchse selbst als auch der Lagersitz sind fertigungstechnisch einfache Lösungen im Vergleich zum bekannten Stand der Technik. Die wirksame Lagerlänge bzgl. der Belastbarkeit und der Dauerlaufeigenschaften ist erfindungsgemäß durch die Summen der beiden Längen der Buchsen und deren Abstand voneinander gegeben. Dadurch sind diese Lagereigenschaften in einem weiten Bereich bei der paar weisen Verwendung von kurzen Excenterbuchsen einstellbar.

Fertigungs- und montagetechnisch besonders einfach ist es, wenn die zwei Excenterbuchsen identisch ausgebildet sind.

Gemäß einer bevorzugten Ausführungsform sind Positionierungsmittel der beiden verwendeten Excenterbuchsen umfangsseitig bezüglich der Exzentrizität exakt an gleicher Stelle angeordnet, um absolut verkippungsfrei schnell und einfach den Achsabstand durch das abgestimmte Verdrehen der beiden Buchsen gewährleisten zu können. Dies ist besonders dann gewährleistet, wenn die Positionierungsmittel zugleich als Angriffsfläche und -kante für ein geeignetes Montagewerkzeug zum Verdrehen der Excenterbuchsen dienen.

Nachfolgend sind zwei Ausführungsbeispiele der erfindungsgemäßen Lagerbuchse der Antriebseinheit beschrieben. Es zeigen
- Fig. 1: eine Draufsicht auf eine erfindungsgemäße Antriebseinheit bei abgenommenen Getriebedeckel,
- Fig. 2: in einer perspektivischen Ansicht ausschnitt weise die Antriebeinheit,
- Fig. 3: in vergrößertem Maßstab in perspektivischer Ansicht eine Excenter-Lagerbuchse gemäß einem ersten Ausführungsbeispiel, sowie
- Fig. 4: in vergrößertem Maßstab in perspektivischer Ansicht eine Excenter-Lagerbuchse gemäß einem zweiten Ausführungsbeispiel.

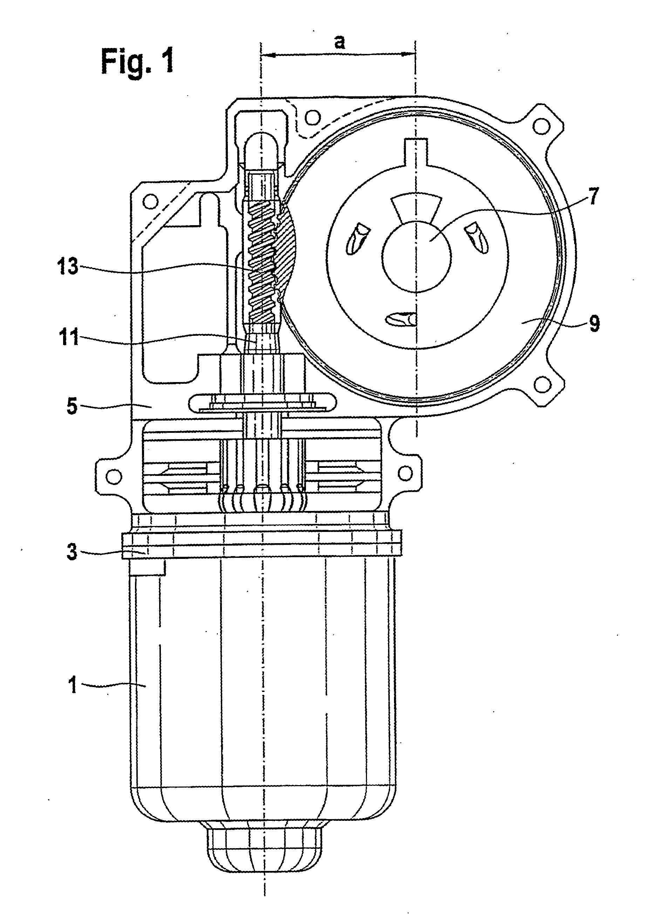

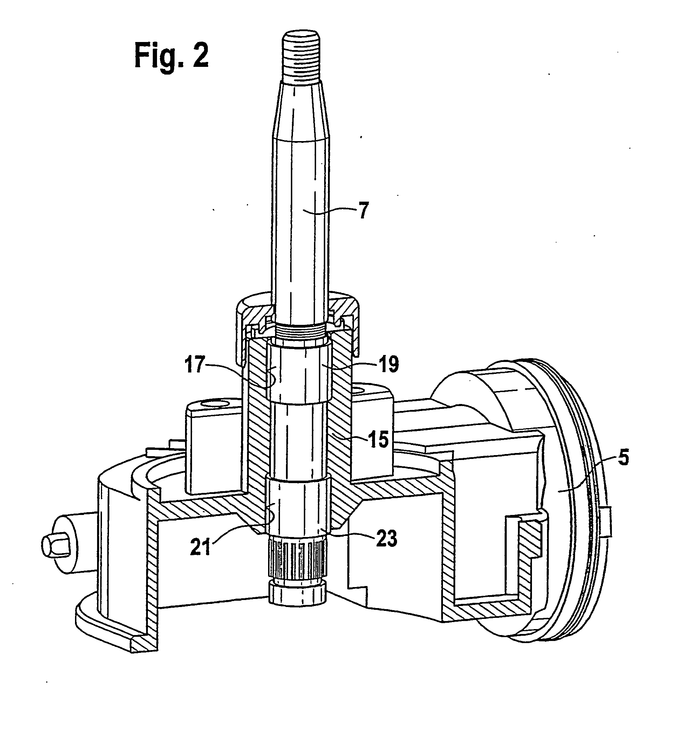

Eine in Fig. 1 und 2 dargestellte elektrische Antriebseinheit für Scheibenwischer eines Kraftfahrzeuges umfasst ein im wesentlichen topfförmiges Polgehäuse 1, in dem ein Anker untergebracht ist. Stirnseitig an einem Flansch 3 des Polgehäuses 1 ist ein im wesentlichen ebenfalls topfförmiges Getriebegehäuse 5 befestigt, das z.B. aus Aluminiumdruckguss hergestellt ist. In dem Getriebegehäuse 5 ist ein auf einer Abtriebswelle 7 befestigtes Schneckenrad 9 angeordnet, welches in eine mit einer Ankerwelle 11 des Ankers verbundene Schnecke 13 eingreift (Fig. 1). Das gebildete Schneckengetriebe ermöglicht die bei einem Wischermotor erforderlichen Drehzahlen und Drehmomente. Das Getriebegehäuse 5 weist einen Lagerdom 15 auf, der einen ersten Lagersitz 17 für eine obere Lagerbuchse 19 und einen zweiten Lagersitz 21 für eine untere Lagerbuchse 23 besitzt (Fig. 2).

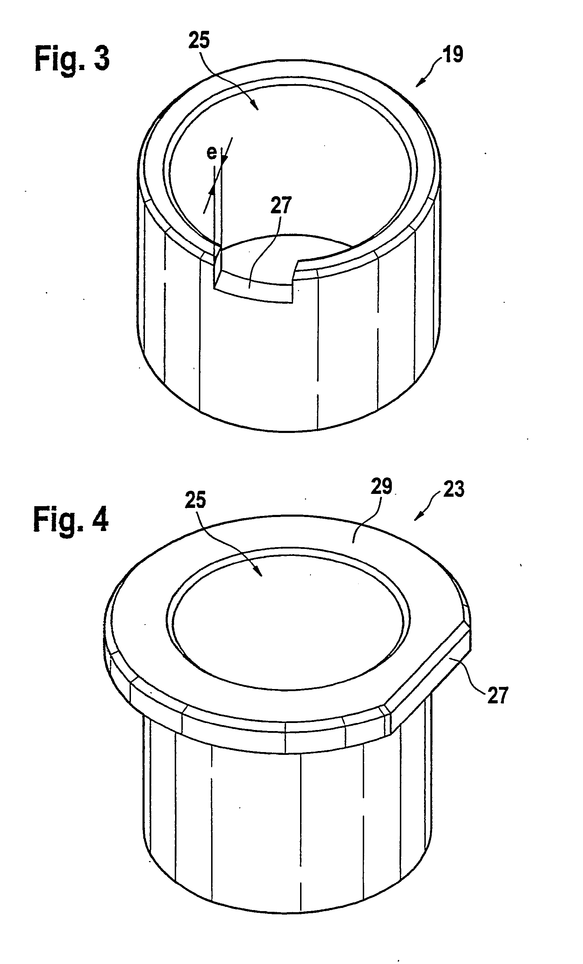

Um einen exakten Achsabstand a zwischen der Ankerwelle 11 und damit der Schnecke 13 und der Abtriebswelle 7 und damit des Schneckenrades 9 einstellen zu können, sind die Lagerbuchsen 19, 23 als Excenterbuchsen mit einer identischen Exzentrizität e ausgebildet. Innenbohrungen 25 oder Zylinderinnenflächen der Excenterbuchsen 19, 23 sind dabei gemäß Fig. 3 und 4 exzentrisch mit der Exzentrizität e angeordnet. Die in der Antriebseinheit montierten Lagerbuchsen 19, 23 können paarweise identisch oder auch paarweise mit gewissen unterschiedlichen Merkmalen ausgeführt sein. Die Lagerbuchsen 19, 23 weisen jeweils ein Positionierungsmittel 27 auf, anhand dessen die Buchsen in den Lagersitzen 17, 21 in ihrer Drehstellung exakt zueinander ausgerichtet werden können. Dabei sind die Positioniermittel 27, umfangsseitig bezüglich der Exzentrizität e exakt an gleicher Stelle angeordnet. Zudem sind die Positioniermittel 27 derart ausgebildet, dass sie zugleich als Angriffsfläche und -kante für ein Montagewerkzeug zum exakten Verdrehen der Excenterbuchsen 19, 23 dienen. Die Lagerbuchse nach Fig. 4 weist weiterhin einen Bund 29 auf, der zum einen als Anschlag bei der Montage und zum anderen als eine Anlauffläche für eine äußere Scheibe (nicht gezeigt) dient. Durch das Verdrehen der Lagerbuchsen 19, 23 im Lagerdom 15 ist der Achsabstand a aufgrund der Exzentrizität e der Lagerbuchsen 19, 23 einstellbar. Die Einstellung des Achsabstandes a erfolgt dabei durch Vermessung des vormontierten Motors, entsprechendes Verdrehen der Lagerbuchsen in den jeweiligen Lagersitzen 17, 21 in die entsprechenden Positionen. Sobald der korrigierte gewünschte Achsabstand a erreicht ist, werden die beiden Excenterbuchsen 19, 23 in dem Lagerdom 15 abschließend befestigt, z.B. durch Verpressen. Dass sich die beiden Excenterbuchsen beim Betrieb nicht unerwünscht in ihren Lagersitzen verdrehen können, ist durch eine geeignete Abstimmung der Lagersitz- und Buchsentoleranzen sichergestellt.

Aufgrund des zweigeteilten Lagers, der einfacheren Geometrie und der resultieren kürzeren Bauweise der Lagerbuchsen können auch Lagerlängen größer 40 mm einfach mittels Excenterprinzip realisiert werden.

## Patentansprüche

1. Elektrische Antriebseinheit, insbesondere für Scheibenwischer eines Kraftfahrzeuges, mit einem Antriebsmotor mit einem Getriebegehäuse (5) zur Aufnahme wenigstens eines auf einer Abtriebswelle (7) gelagerten Schneckenrades (9), das in eine mit einer Ankerwelle (11) des Antriebsmotors verbundene Schnecke (13) eingreift, welche Abtriebswelle (7) in einer Excenterbuchse gelagert ist, die zur Einstellung eines Achsabstandes (a) zwischen der Ankerwelle (11) und der Abtriebswelle (7) verdrehbar und im verdrehten Zustand verdrehsicher im Getriebegehäuse (5) montierbar ist, **dadurch gekennzeichnet, dass** zur Lagerung der Abtriebswelle (7) voneinander beabstandet zwei Excenterbuchsen (19, 23) in dem Getriebegehäuse (5) montiert sind.

2. Antriebeinheit nach Anspruch 1, **dadurch gekennzeichnet, dass** die zwei Excenterbuchsen (19; 23) identisch ausgebildet sind.

3. Antriebseinheit nach Anspruch 1 oder 2 , **dadurch gekennzeichnet, dass** die zwei Excenterbuchsen (19; 23) eine gleiche Exzentrizität (e) aufweisen.

4. Antriebeinheit nach Anspruch 1, 2 oder 3, **dadurch gekennzeichnet, dass** an den beiden Excenterbuchsen (19; 23) Positionierungsmittel (27) vorgesehen sind.

5. Antriebeinheit nach Anspruch 4, **dadurch gekennzeichnet, dass** die Positionierungsmittel (27) umfangsseitig bezüglich der Exzentrizität (e) exakt an gleicher Stelle angeordnet sind.

6. Antriebseinheit nach Anspruch 4 oder 5, **dadurch gekennzeichnet, dass** die Positionierungsmittel (27) zugleich als Angriffsfläche und -kante für ein Montagewerkzeug zum Verdrehen der Excenterbuchsen dienen.

7. Verfahren zur Montage einer elektrischen Antriebeinheit mit einem Getriebegehäuse (5) zur Aufnahme wenigstens eines auf einer Abtriebswelle (7) gelagerten Schneckenrades (9), das in eine mit einer Ankerwelle (11) des Antriebsmotors verbundene Schnecke (13) eingreift, welche Abtriebswelle (7) in einer Excenterbuchse gelagert ist, **dadurch gekennzeichnet, dass** zur Lagerung der Abtriebswelle voneinander beabstandet zwei Excenterbuchsen (19, 23) dienen, die in die richtige Drehposition gebracht und dann in dem Getriebegehäuse (5) verdrehsicher befestigt werden zur Einstellung eines Achsabstandes (a) zwischen der Ankerwelle (11) und der Abtriebswelle (7).

## Claims

1. Electric drive unit, in particular for windscreen wipers of a motor vehicle, having a drive motor with a gear mechanism housing (5) for accommodating at least one worm gear (9) which is mounted on an output drive shaft (7) and engages in a worm (13) which is connected to an armature shaft (11) of the drive motor, the said output drive shaft (7) being mounted in an eccentric bushing which can be twisted in order to adjust an axial distance (a) between the armature shaft (11) and the output drive shaft (7) and, in the twisted state, can be installed in the gear mechanism housing (5) such that it cannot be twisted, **characterized in that** two eccentric bushings (19, 23) which are spaced apart from one another are installed in the gear mechanism housing (5) in order to mount the output drive shaft (7).

2. Drive unit according to Claim 1, **characterized in that** the two eccentric bushings (19; 23) are of identical design.

3. Drive unit according to Claim 1 or 2, **characterized in that** the two eccentric bushings (19; 23) have an identical eccentricity (e).

4. Drive unit according to Claim 1, 2 or 3, **characterized in that** positioning means (27) are provided on the two eccentric bushings (19; 23).

5. Drive unit according to Claim 4, **characterized in that** the peripheries of the positioning means (27) are arranged exactly at the same point with respect to the eccentricity (e).

6. Drive unit according to Claim 4 or 5, **characterized in that** the positioning means (27) serve simultaneously as an engagement area and engagement edge for an installation tool for twisting the eccentric bushings.

7. Method for installing an electric drive unit having a gear mechanism housing (5) for accommodating at least one worm gear (9) which is mounted on an output drive shaft (7) and engages in a worm (13) which is connected to an armature shaft (11) of the drive motor, the said output drive shaft (7) being mounted in an eccentric bushing, **characterized in that** two eccentric bushings (19, 23) which are spaced apart from one another serve to mount the output drive shaft, the said eccentric bushings being moved to the correct rotation position and then fixed in the gear mechanism housing (5) such that they cannot be twisted, in order to adjust an axial distance (a) between the armature shaft (11) and the output drive shaft (7).

## Revendications

1. Unité d'entraînement électrique, en particulier pour un essuie-glace d'un véhicule automobile, comprenant un moteur d'entraînement avec une boîte de transmission (5) pour recevoir au moins une roue à denture hélicoïdale (9) montée sur un arbre de sortie (7), qui vient en prise dans une vis sans fin (13) connectée à un arbre d'induit (11) du moteur d'entraînement, lequel arbre de sortie (7) est monté dans une douille excentrée qui peut tourner pour l'ajustement d'un écart axial (a) entre l'arbre d'induit (11) et l'arbre de sortie (7) et qui peut être montée dans l'état tourné de manière solidaire en rotation dans la boîte de transmission (5), **caractérisée en ce que** pour le support sur palier de l'arbre de sortie (7), deux douilles excentrées (19, 23) espacées l'une de l'autre sont montées dans la boîte de transmission (5).

2. Unité d'entraînement selon la revendication 1, **caractérisée en ce que** les deux douilles excentrées (19 ; 23) sont réalisées de manière identique.

3. Unité d'entraînement selon la revendication 1 ou 2, **caractérisée en ce que** les deux douilles excentrées (19 ; 23) présentent une excentricité identique (e).

4. Unité d'entraînement selon la revendication 1, 2 ou 3, **caractérisée en ce que** l'on prévoit sur les deux douilles excentrées (19 ; 23) des moyens de positionnement (27).

5. Unité d'entraînement selon la revendication 4, **caractérisée en ce que** les moyens de positionnement (27) sont disposés du côté de la périphérie par rapport à l'excentricité (e), exactement au même endroit.

6. Unité d'entraînement selon la revendication 4 ou 5, **caractérisée en ce que** les moyens de positionnement (27) servent en même temps de surface et d'arête de prise pour un outil de montage, pour faire tourner les douilles excentrées.

7. Procédé de montage d'une unité d'entraînement électrique avec une boîte de transmission (5) pour recevoir au moins une roue à denture hélicoïdale (9) montée sur un arbre de sortie (7), qui vient en prise dans une vis sans fin (13) connectée à un arbre d'induit (11) du moteur d'entraînement, lequel arbre de sortie (7) est monté dans une douille excentrée, **caractérisé en ce que** pour le support sur palier de l'arbre de sortie, on utilise deux douilles excentrées (19, 23) espacées l'une de l'autre, qui sont amenées dans la position de rotation correcte et qui sont ensuite fixées de manière solidaire en rotation dans la boîte de transmission (5) pour l'ajustement d'un écart axial (a) entre l'arbre d'induit (11) et l'arbre de sortie (7).
